# EUROPEAN PATENT SPECIFICATION

(11) **EP 2 638 220 B1**
(45) Date of publication and mention of the grant of the patent: **25.07.2018**
(21) Application number: 11840052.2
(22) Date of filing: 06.10.2011
(51) Int. Cl.: E04D 13/00, E04D 1/34, E04D 13/17, A01M 29/32

(54) **System with a bracket, use of the system and method**
System mit einer Klammer, Verwendung dieses Systems und Verfahren
Système avec attache, utilisation de ce système et méthode

(30) Priority: 02.03.2011 DK 201100143; 09.11.2010 DK 201001019
(43) Date of publication of application: 18.09.2013
(73) Proprietor: Thomsen, Thomas Toftemann, 9600 Aars (DK)
(72) Inventor: Thomsen, Thomas Toftemann, 9600 Aars (DK)
(74) Representative: Holme Patent A/S
(86) International application number: PCT/DK2011/000111
(87) International publication number: WO 2012/062315

(56) References cited:
- EP-A1- 0 383 604
- EP-A1- 1 788 165
- EP-A2- 1 359 264
- EP-A2- 2 186 962
- WO-A2-2007/122502
- CH-A- 533 216
- DE-A1- 3 507 460
- DE-A1- 3 507 460
- DE-A1- 3 824 808
- DE-A1-102008 059 134
- DE-U1- 20 303 875
- DE-U1- 29 601 730
- FR-A- 1 096 101
- FR-A1- 2 508 519
- FR-A1- 2 874 636
- GB-A- 2 145 131
- GB-A- 2 190 740
- GB-A- 2 354 266
- NL-A- 9 300 164
- US-A- 5 092 086
- US-A- 5 899 023

## Description

The invention relates to a system comprising a bracket suited for fastening of bird comb.

The invention also relates to the application of the system and the method for fastening a bird comb to a roof construction. It is known to mount ventilated bird comb in roof constructions.
The ventilated bird combs are mounted between roofing panels such as tile and typically the eaves flashing, which is mounted on the base of the roof. The object of mounting a ventilated bird comb is to maintain an acceptable air ventilation in the roof construction and animals preferably birds are prevented from entering the roof.

Ventilated bird combs are with the hitherto known technique mounted by leading screws through the bird combs down through the eaves flashing for fastening by screwing in the below roof construction, typically base of the roof.

It has been found, however, that there are some drawbacks of this known technique, including that the holes, which are made in the eaves flashing by penetration of screws for fastening bird combs, can form basis for moisture and water, which subsequently can create rot in the roof construction, resulting in that the roof subsequently becomes destroyed and must be replaced.
From WO 2007122502 A2 (CRICONIA et al.) is known a bracket for fastening a special type of roof tile, which has an exterior, which is partially circular. The brackets are fastened to the roof construction, which is to be covered by the roof tiles with a screw bracket. For the special partially circular roof tiles, there is also developed a partially circular bird comb, which can be fastened by the brackets screwn into the roof construction.
The from WO 2007122502 A2 known technique however also involves some drawbacks, since the technique can only be used for special roof tiles and for that purpose specially adapted bird combs, and it is a drawback that the brackets must be fastened with screw brackets, which is both time consuming and material demanding and thereby relatively costly to install.

Another technique is known from DE 203 03 875 U1 wherein a bird comb is fastened to the eaves flashing.

It is therefore an object of the invention to improve the known methods and techniques. The object of the invention is achieved by a system according to claim 1. The bracket can be used for fastening bird combs without making hole in eaves flashing since the "U" shaped part of the bracket can squeeze around a lath in the roof construction and thereby can be fastened to the roof construction without application of screw brackets or tools whereby openings for moisture and water are not made to the below roof construction and the bracket is also quick and inexpensive to mount and can be used for ordinarily shaped bird combs, which fit most types of roof tiles.

Further appropriate embodiments of the system are stated in the dependent claims. The invention, as mentioned, also includes the application of said system for fastening a bird comb including a ventilated bird comb for roof constructions. The invention will now be explained more fully with reference to the drawings, in which:
Fig. 1 shows a setup, which includes a part of a roof construction where a bracket is made ready for mounting.
Fig. 2 shows how a ventilated bird comb is made ready for tool free mounting for two brackets.
Fig. 3 shows a ventilated bird comb, which is mounted to two brackets.
Fig. 4 shows how the ventilated bird comb after mounting to the brackets easily can be lifted up from the eaves flashing whereby cleaning becomes very easy to perform.
Fig. 5 shows a mounted ventilated bird comb with a mounted tile roofing panel.
Fig. 6 shows a bracket for fastening a ventilated bird comb seen from the side.
Fig. 7 shows a bracket for fastening a ventilated bird comb seen from above.
Fig. 8 shows a preferred embodiment of a bracket for fastening of ventilated bird comb.
Fig. 9 shows mounting of ventilated bird comb with preferred version of mounting bracket.
Fig. 10 shows an example of mounting of ventilated bird comb with application of preferred version of mounting bracket.
Fig. 11 shows another example of mounting of ventilated bird comb with application of preferred version of mounting bracket.
Fig. 12 shows a third example of mounting of ventilated bird comb with application of preferred version of mounting bracket.
Fig. 13 shows different designs of preferred embodiments of brackets.
Fig. 14 shows fastening of non-ventilated bird combs with a bracket of a system according to the invention.

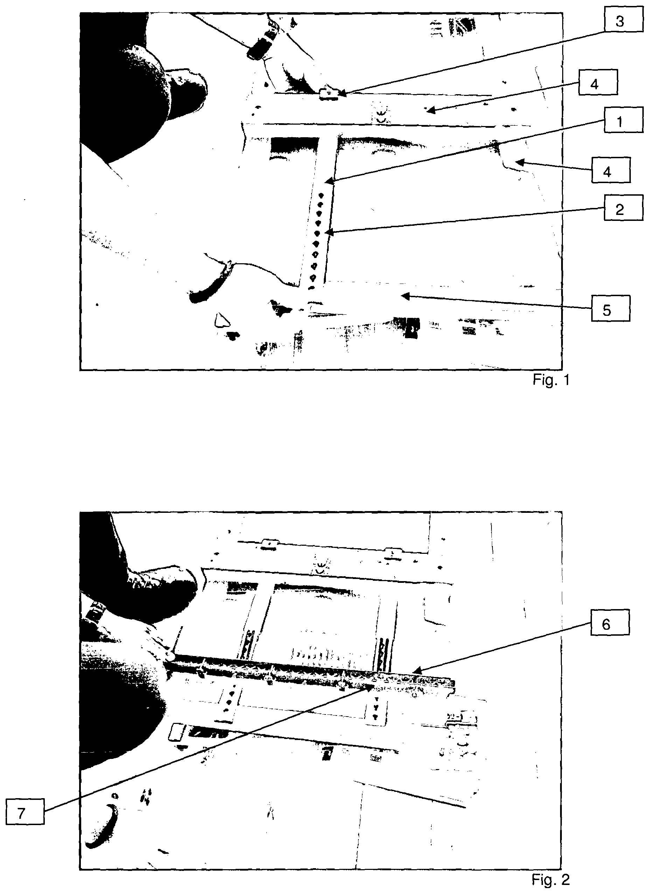

In fig. 1 is with 1 shown a bracket for fastening to a roof construction 4 by for example fastening by screwing through a mounting hole 3.
The bracket 1 is shaped with shapes 2 for fastening a ventilated bird comb.
The shapes 2 are in the shown preferred embodiment manufactured as connected holes with varying diameter or width.

The bracket 1 reaches out so it fully or partially covers the eaves flashing 5, which shields for the below roof construction.
Fig. 2 shows a ventilated bird comb 6, which in the mounting surface is provided with items 7, which are shape complementary to the shapes 2 in the brackets 1.

The items 7 are in the shown preferred embodiment shaped as the top of screw heads.

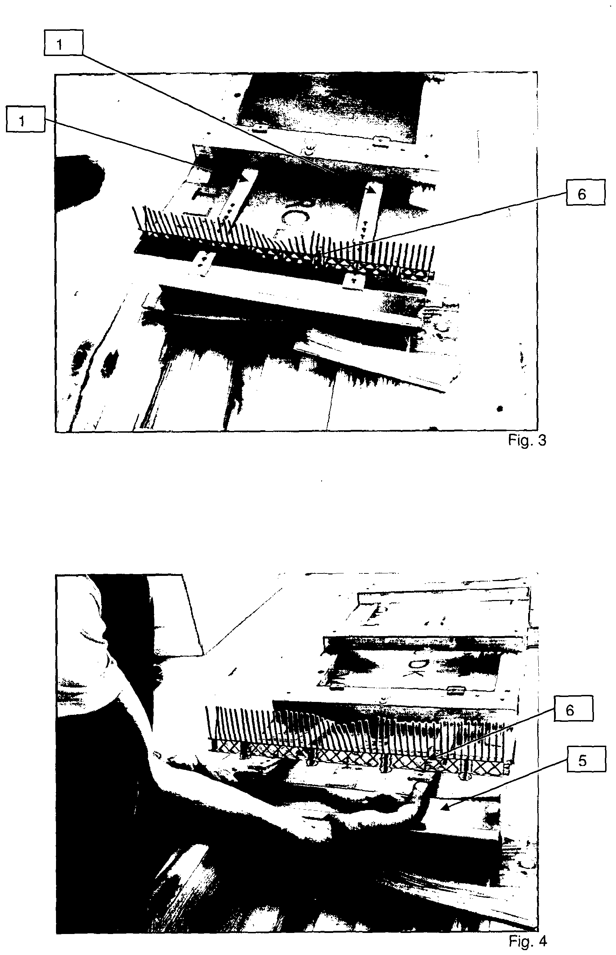

Fig. 3 shows a ventilated bird comb 6, which is mounted to brackets 1, which is done without application of tools and without application of penetrating fittings such as screws or nails.

Fig. 4 shows how the ventilated bird comb 6, mounted to the brackets 1, can easily be lifted whereby cleaning the roof can be carried out quickly and efficiently.

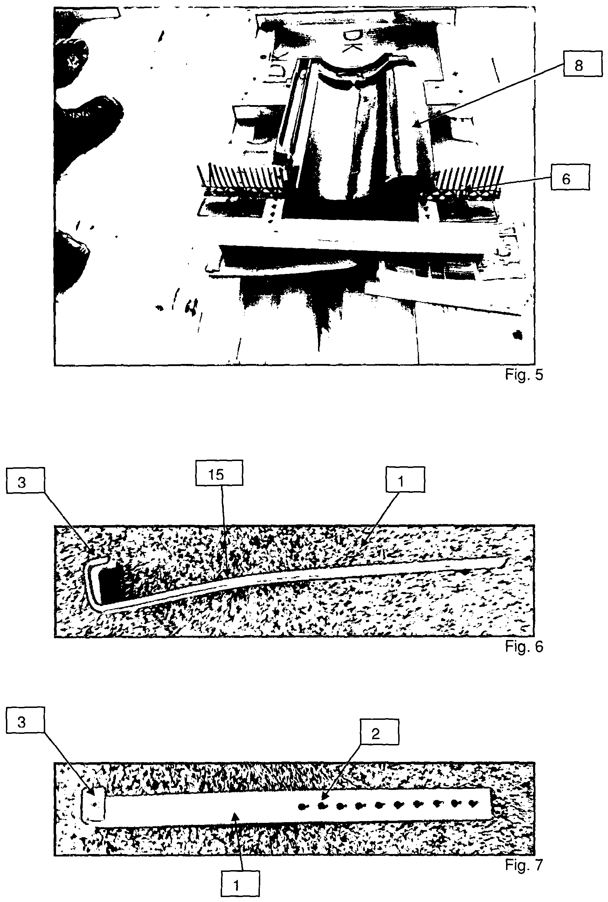

Fig. 5 shows how a roofing panel 8 is mounted on the ventilated bird comb 6.

Fig. 6 shows a bracket 1, seen from the side, whereby it will appear that the bracket in the shown preferred embodiment is curved 15 in the longitudinal direction, whereby mounting is simplified and the bracket gets an appropriate spring effect.

Moreover, it is seen that the bracket in the end with fastening holes 3 is shaped as a hook for appropriate adaption to the roof construction 4 to which the bracket 1 is to be fastened.

Fig. 7 shows a bracket 1, seen from above, with multiple shapes 2 for fastening of ventilated bird comb 6.

The multiple shapes 2 make it easy to find an optimum mounting position for fastening ventilated bird combs 6.

Bracket 1 and ventilated bird combs 6 can be manufactured from all suited materials including metallic and / or polymeric.

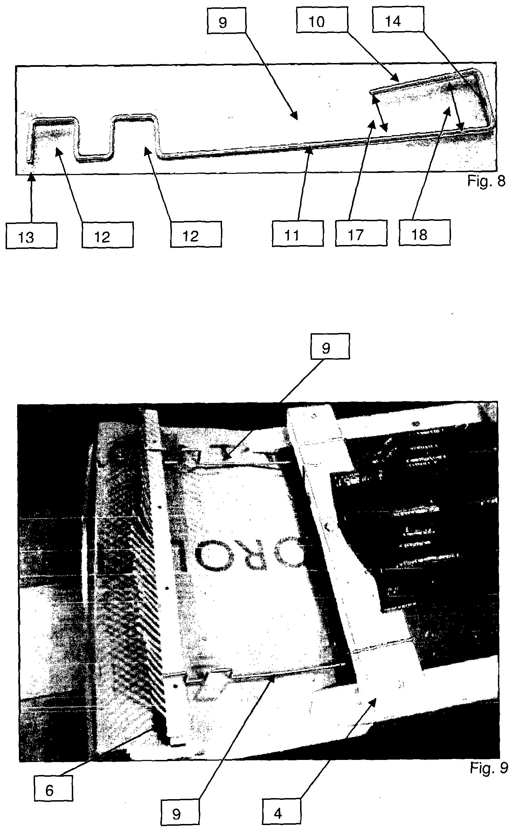

In fig. 8 is shown a preferred embodiment of a bracket 9 of a system for fastening a ventilated bird comb 6.
The bracket 9 is characterized in that it is "U" shaped from a first end piece 10 preferably by the first end piece 10 via a bend continues to a part piece 14, which via a bend continues to a length piece 11 where the distance 17,18 between the first end piece 10 and the length piece 11 is reduced from the part piece 14 towards the free end 19 of the first end piece 10.

It is hereby achieved that the "U" shaped part of the bracket 9 can squeeze around a lath in a roof construction and can thereby be fastened to the roof construction without application of screw brackets and thereby mounted without application of tools.

In fig. 9 is shown how the bracket 9 can be used for mounting a ventilated bird comb 6.
It is a special characteristic of mounting ventilated bird combs 6 with brackets 9 that tools or accessories such as screws or nails are not needed for the mounting.
With the mounting, as shown in fig. 9, the bracket 9 is fastened to the roof construction 4 by squeezing since the bracket 9 is lead in over the roof construction 4 and squeezes around this with the bracket parts 10 and 11.
The brackets 9 can be manufactured from corrosion-proof metals such as steel. The "U" shaped end parts 12 can be used for adjustment of the distance between the roof construction 4 and the ventilated bird comb 6.

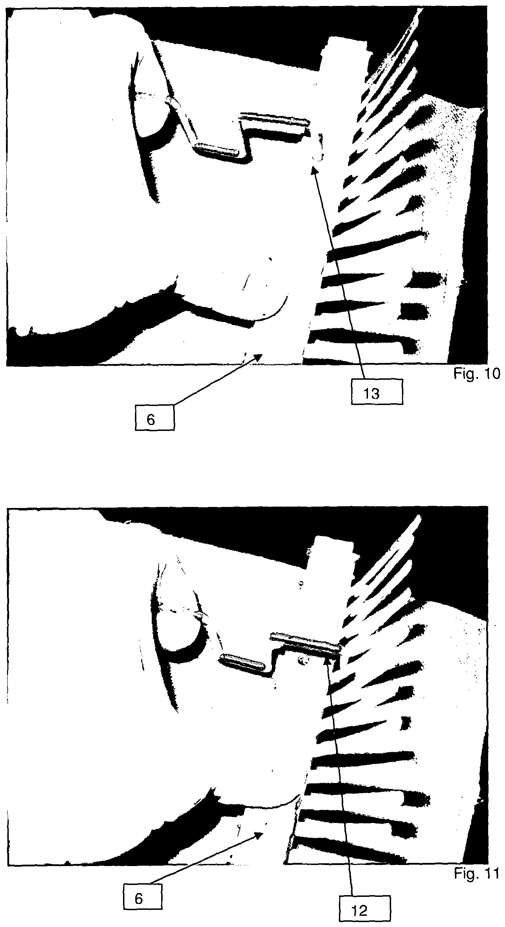

In fig. 10 is shown how the second end 13 of the bracket 9 can be used for mounting a ventilated bird comb 6, which is shaped for the purpose with a hole for fastening of the bracket end 13.

Fig. 11 shows how the outermost "U" shaped end part 12 of a bracket 9 can be used for mounting a ventilated bird comb 6.

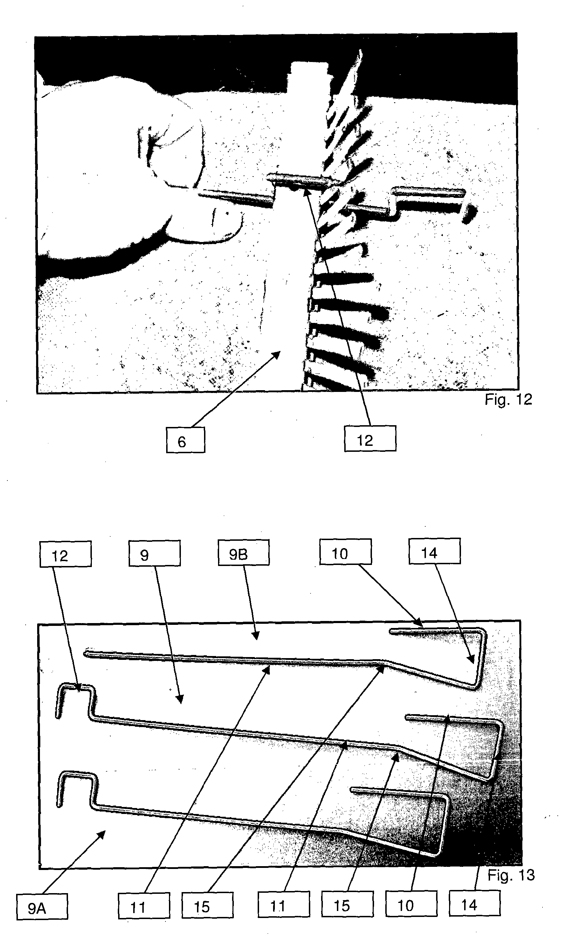

In fig. 12 is shown how a non-outermost "U" shaped end part can be used for mounting a ventilated bird comb 6.

In a mounting situation as the one shown in fig. 12, the excess part of the bracket 9 can, if necessary, be removed by for example cutting.

In fig. 13 is shown 3 preferred embodiments of bracket 9, 9A, 9B, where it is seen that the length piece 11 is provided with a bend 15 preferably opposite the free end of the first end piece 10.

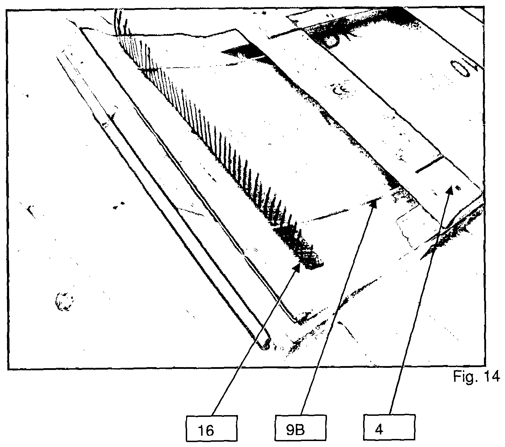

Fig. 14 shows an example of mounting of a non-ventilated bird comb 16, which is fastened by a bracket 9B, which is fastened to a lath in the roof construction 4 and fastens the bird comb 16 by impact from a pressure force.

In a preferred embodiment, the bracket 1,9, 9A, 9B is manufactured from a metallic guy or wire.

## Claims

1. System comprising a bracket (1, 9, 9A, 9B), a bird comb and a roof construction for fastening the bird comb (6, 16) to the roof construction (4), wherein the bracket (1, 9, 9A, 9B) has a "U" shaped part, the "U" shaped part has a first end piece (10) with a free end (19), the first end piece (10) extends via a bending into a part piece (14), which via a bending extends into a length piece (11), **characterized in that** the distance (17,18) between the end piece (10) and the length piece (11) is reduced from the part piece (14) towards the free end (19) of the end piece (10), and where the bracket is configured so that the "U" shaped part of the bracket (1, 9, 9A, 9B) is able to be squeezed around a lath in the roof construction (4) and the bird comb (6, 16) can be fastened to the bracket (1, 9, 9A, 9B) without making holes in the eaves flashing.

2. System according to claim 1 **characterized in that** the length piece (11) ends with a number of "U" shaped end parts (12), which end in a second end piece (13).

3. System according to claim 2, **characterized in that** the length piece (11) ends with one "U" shaped end part (12).

4. System according to claim 2, **characterized in that** the length piece (11) ends with two "U" shaped end parts (12).

5. System according to any of the claims 1 - 4 **characterized in that** the length piece (11) is provided with a bend (15) preferably facing the free end of the first end piece (10).

6. System according to any of the claims 1 - 5 **characterized in that** the bracket (1, 9, 9A, 9B) is manufactured from a metallic guy or wire.

7. Use of the system according to one or more of claims 1 to 6 for fastening of a bird comb, such as a ventilated bird comb, to a roof construction (4).

8. Method for fastening a bird comb (6, 16) to a roof construction (4) without making holes in the eaves flashing by using a bracket (1, 9, 9A, 9B) having a "U" shaped part, the "U" shaped part has a first end piece (10) with a free end (19), the first end piece (10) via a bending extends into a part piece (14), which via a bending extends into a length piece (11), where the distance (17,18) between the first end piece (10) and the length piece (11) is reduced from the part piece (14) towards the free end (19) of the first end piece (10), wherein:
- the "U" shaped part of the bracket (1, 9, 9A, 9B) is squeezed around a lath in the roof construction (4), and
- the bird comb (6, 16) is fastened to the bracket (1, 9, 9A, 9B).

9. Method according to claim 8, wherein the fastening of the bird comb (6, 16) to the bracket (1) is by means of items (7) provided on the mounting surface of the bird comb (6, 16), where the items (7) are shaped complementary to shapes (2) in the bracket (1).

10. Method according to claim 9, wherein the shapes (2) in the bracket (1) are holes.

11. Method according to claim 8 using the bracket (9, 9A) according to any of claim 2 - 6, wherein the second end piece (13) of the bracket (9, 9A) is used for mounting a ventilated bird comb (6, 16), which is shaped for the purpose with a hole for fastening to the bracket end (13).

12. Method according to claim 8 using the bracket (9, 9A) according to claim 2 - 6, wherein one of the number of "U" shaped end parts (12) of the bracket (9, 9A) is used for mounting a ventilated bird comb (6, 16).

13. Method according to claim 8 for mounting a non-ventilated bird comb (16), wherein the bird comb (16) is fastened by a bracket (9B), which is fastened to a lath in the roof construction (4) and fastens the bird comb (16) by impact from a pressure force.

## Patentansprüche

1. System mit einer Klammer (1, 9, 9A, 9B), einem Vogelkamm und einer Dachkonstruktion zum Befestigen des Vogelkamms (6, 16) an der Dachkonstruktion (4), wobei die Klammer (1, 9, 9A, 9B) einen "U"-förmigen Teil hat, der "U"-förmige Teil ein erstes Endstück (10) mit einem freien Ende (19) hat, das erste Endstück (10) sich über eine Biegung in ein Teilstück (14) erstreckt, das sich über eine Biegung in ein Längsstück (11) erstreckt, **dadurch gekennzeichnet, dass** der Abstand (17, 18) zwischen dem Endstück (10) und dem Längsstück (11) von dem Teilstück (14) aus in Richtung des freien Endes (19) des Endstückes (19) verringert ist, und wobei die Klammer so gestaltet ist, dass der "U"-förmige Teil der Klammer (1, 9, 9A, 9B) um eine Latte in der Dachkonstruktion (4) herum geklemmt werden kann und der Vogelkamm (6, 16) an der Klammer (1, 9, 9A, 9B) ohne Löcher in den Traufstreifen zu machen, befestigt werden kann.

2. System nach Anspruch 1, **dadurch gekennzeichnet, dass** das Längsstück (11) mit einer Anzahl "U"-förmiger Endteile (12) endet, die in einem zweiten Endstück (13) enden.

3. System nach Anspruch 2, **dadurch gekennzeichnet, dass** das Längsstück (11) mit einem "U"-förmigen Endteil (12) endet.

4. System nach Anspruch 2, **dadurch gekennzeichnet, dass** das Längsstück (11) mit zwei "U"-förmigen Endteilen (12) endet.

5. System nach irgendeinem der Ansprüche 1 - 4, **dadurch gekennzeichnet, dass** das Längsstück (11) mit einer Biegung (15) versehen ist, die vorzugsweise auf das freie Ende des ersten Endstückes (10) weist.

6. System nach irgendeinem der Ansprüche 1 - 5, **dadurch gekennzeichnet, dass** die Klammer (1, 9, 9A, 9B) aus einem Metallanker oder -draht hergestellt ist.

7. Verwendung des Systems nach einem oder mehreren der Ansprüche 1 bis 6 zum Befestigen eines Vogelkamms, wie z. B. eines belüfteten Vogelkamms, an einer Dachkonstruktion (4).

8. Verfahren zum Befestigen eines Vogelkamms (6, 16) an einer Dachkonstruktion (4) ohne Löcher in dem Traufstreifen zu machen durch Verwenden einer Klammer (1, 9, 9A, 9B), die einen "U"-förmigen Teil hat, wobei der "U"-förmige Teil ein erstes Endstück (10) mit einem freien Ende (19) hat, das erste Endstück (10) sich über eine Biegung in ein Teilstück (14) erstreckt, das sich über eine Biegung in ein Längsstück (11) erstreckt, wobei der Abstand (17, 18) zwischen dem ersten Endstück (10) und dem Längsstück (11) von dem Teilstück (14) aus in Richtung des freien Endes (19) des ersten Endstückes (10) verringert ist, wobei
- der "U"-förmige Teil der Klammer (1, 9, 9A, 9B) um eine Latte in der Dachkonstruktion (4) herum geklemmt wird, und
- der Vogelkamm (6, 16) an der Klammer (1, 9, 9A, 9B) befestigt wird.

9. Verfahren nach Anspruch 8, bei dem das Befestigen des Vogelkamms (6, 16) an der Klammer (1) mittels Teilen (7) erfolgt, die auf der Befestigungsfläche des Vogelkamms (6, 16) vorgesehen sind, wobei die Teile (7) komplementär zu Formen (2) in der Klammer (1) geformt sind.

10. Verfahren nach Anspruch 9, bei dem die Formen (2) in der Klammer (1) Löcher sind.

11. Verfahren nach Anspruch 8, bei dem die Klammer (1) nach irgendeinem der Ansprüche 2 - 6 verwendet wird, wobei das zweite Endstück (13) der Klammer (9, 9A) zum Anbringen eines belüfteten Vogelkamms (6, 16) verwendet wird, der für diesen Zweck mit einem Loch zum Befestigen an dem Klammerende (13) ausgebildet ist.

12. Verfahren nach Anspruch 8, bei dem die Klammer (9, 9A) nach Anspruch 2 - 6 verwendet wird, wobei eines der Anzahl "U"-förmiger Endteile (12) der Klammer (9, 9A) zum Anbringen eines belüfteten Vogelkamms (6, 16) verwendet wird.

13. Verfahren nach Anspruch 8 zum Anbringen eines nicht-belüfteten Vogelkamms (16), wobei der Vogelkamm (16) mit einer Klammer (9B) befestigt wird, die an einer Latte in der Dachkonstruktion (4) befestigt wird und den Vogelkamm (16) durch die Wirkung einer Druckkraft befestigt.

## Revendications

1. Système comprenant un support (1, 9, 9A, 9B), une grille faisant office de protection contre les oiseaux et une structure de toit pour la fixation de la grille (6, 16) faisant office de protection contre les oiseaux à la structure de toit (4) ; dans lequel le support (1, 9, 9A, 9B) possède une partie en forme de "U", la partie en forme de "U" possédant une première pièce terminale (10) comprenant une extrémité libre (19), la première pièce terminale (10) s'étendant via un pliage jusque dans une pièce partielle (14) qui, via un pliage, s'étend jusqu'à dans une pièce longitudinale (11), **caractérisé en ce que** la distance (17, 18) entre la pièce terminale (10) et la pièce longitudinale (11) est réduite par rapport à la pièce partielle (14) en direction de l'extrémité libre (19) de la pièce terminale (10) ; et dans lequel le support est configuré d'une manière telle que la partie en forme de "U" du support (1, 9, 9A, 9B) peut être coincée autour d'une volige dans la structure de toit (4) et la grille (6, 16) faisant office de protection contre les oiseaux peut être fixée au support (1, 9, 9A, 9B) sans devoir faire des trous dans la bande d'étanchéité des gouttières.

2. Système selon la revendication 1, **caractérisé en ce que** la pièce longitudinale (11) se termine par un certain nombre de parties terminales en forme de "U" (12) qui aboutissent dans une deuxième pièce terminale (13).

3. Système selon la revendication 2, **caractérisé en ce que** la pièce longitudinale (11) se termine par une partie terminale en forme de "U" (12).

4. Système selon la revendication 2, **caractérisé en ce que** la pièce longitudinale (11) se termine par deux parties terminales en forme de "U" (12).

5. Système selon l'une quelconque des revendications 1 à 4, **caractérisé en ce que** la pièce longitudinale (11) est munie d'un coude (15), de préférence orienté vers l'extrémité libre de la première pièce terminale (10).

6. Système selon l'une quelconque des revendications 1 à 5, **caractérisé en ce que** le support (1,9,9A, 9B) est fabriqué à partir d'un câble ou d'un fil métallique.

7. Utilisation du système selon une ou plusieurs des revendications 1 à 6 pour fixer une grille faisant office de protection contre les oiseaux, de préférence une grille de ventilation offrant une protection contre les oiseaux, à une structure de toit (4).

8. Procédé pour fixer une grille (6, 16) faisant office de protection contre les oiseaux à une structure de toit (4) sans devoir faire des trous dans la bande d'étanchéité des gouttières en utilisant un support (1, 9,9A, 9B) possédant une partie en forme de "U", la partie en forme de "U" possédant une première pièce terminale (10) comprenant une extrémité libre (19), la première pièce terminale (10) s'étendant via un pliage jusque dans une pièce partielle (14) qui, via un pliage, s'étend jusqu'à dans une pièce longitudinale (11); dans lequel la distance (17, 18) entre la première pièce terminale (10) et la pièce longitudinale est réduite par rapport à la pièce partielle (14) en direction de l'extrémité libre (19) de la première pièce terminale (10) ; dans lequel :
- la partie en forme de "U" du support (1, 9, 9A, 9B) est coincée autour d'une volige dans la structure de toit (4) ; et
- la grille (6, 16) faisant office de protection contre les oiseaux est fixée au support (1, 9, 9A, 9B).

9. Procédé selon la revendication 8, dans lequel la fixation de la grille (6, 16) faisant office de protection contre les oiseaux au support (1) s'effectue au moyen d'éléments (7) prévus sur la surface de montage de la grille (6, 16) faisant office de protection contre les oiseaux ; dans lequel les éléments (7) possèdent une configuration qui est complémentaire aux configurations (2) dans le support (1).

10. Procédé selon la revendication 9, dans lequel les configurations (2) dans le support (1) sont des trous.

11. Procédé selon la revendication 8 utilisant le support (9,9A) selon l'une quelconque des revendications 2 à 6, dans lequel la seconde pièce terminale (13) du support (9,9A) est utilisée pour le montage d'une grille de ventilation (6, 16) offrant une protection contre les oiseaux, qui est configurée à cet effet avec un trou à des fins de fixation à l'extrémité (13) du support.

12. Procédé selon la revendication 8 utilisant le support (9,9A) selon l'une quelconque des revendications 2 à 6, dans lequel une desdites plusieurs parties terminales en forme de "U" (12) du support (9, 9A) est utilisée pour le montage d'une grille de ventilation (6, 16) offrant une protection contre les oiseaux.

13. Procédé selon la revendication 8, pour le montage d'une grille non de ventilation (16) offrant une protection contre les oiseaux, dans lequel la grille (16) faisant office de protection contre les oiseaux est fixée par un support (9B), qui est fixé à une volige dans la structure de toit (4) et qui fixe la grille (16) faisant office de protection contre les oiseaux par un impact émanant d'une force de pression.
